# EUROPEAN PATENT SPECIFICATION

(11) **EP 1 595 636 B1**
(45) Date of publication and mention of the grant of the patent: **05.11.2008**
(21) Application number: 04254329.8
(22) Date of filing: 20.07.2004
(51) Int. Cl.: B23K 20/12, B23K 37/04, B23Q 1/03, B23Q 1/76, B23Q 3/02, B61D 17/00, B62D 65/02, B23P 21/00

(54) **Apparatus for friction stir welding parts of body structure block using a plurality of beds with height and inclination adjustments ; Method using such apparatus**
Vorrichtung zum drehenden Reibschweissen von Teilen einer Struktur mit Verwendung mehrerer Spannvorrichtungen mit Hoch- und Neigungsanpassungen ; Verfahren mit Verwendung solcher Vorrichtung
Dispositif de soudage par friction agitation de parties d'une structure utilisant un banc de travail ajustable en hauteur et inclinaison ; Méthode utilisant un tel dispositif

(30) Priority: 11.05.2004 JP 2004140626
(43) Date of publication of application: 16.11.2005
(73) Proprietor: Hitachi, Ltd., Chiyoda-ku, Tokyo 101-8010 (JP)
(72) Inventor: Fujii, Tsuyoshi Hitachi Ltd. Intel. Prop. Grp., Chiyoda-ku Tokyo 100-8220 (JP); Fukuyori, Kazushige Hitachi Kasado Kikai Co. Ltd., Kudamatsu-shi Yamagushi 744-0002 (JP)
(74) Representative: Paget, Hugh Charles Edward

(56) References cited:
- DE-U1- 20 319 159
- DE-U1- 29 501 340
- US-A- 4 309 824
- US-A- 5 163 793
- PATENT ABSTRACTS OF JAPAN vol. 2003, no. 09, 3 September 2003 (2003-09-03) -& JP 2003 136257 A (HITACHI LTD), 14 May 2003 (2003-05-14)
- PATENT ABSTRACTS OF JAPAN vol. 2002, no. 10, 10 October 2002 (2002-10-10) -& JP 2002 160077 A (KAWAJU KIKI TEKKU:KK), 4 June 2002 (2002-06-04)
- PATENT ABSTRACTS OF JAPAN vol. 2003, no. 12, 5 December 2003 (2003-12-05) -& JP 2003 260573 A (KAWASAKI HEAVY IND LTD), 16 September 2003 (2003-09-16)

## Description

The present invention relates to an apparatus for manufacturing a body structure block by welding plural workpieces, such as extruded shape members, and to a method of manufacturing a body structure block using such apparatus.

### DESCRIPTION OF THE RELATED ART

Generally, a railway car body is a large structure, with a total length of approximately 10 to 25 m and a height greater than 2 m. The railway car body structure is constructed by assembling and joining six body structure blocks; an underframe, two side structures, a roof structure and two end structures.

The body structure block of a railway car, such as a side structure, is formed by attaching a plurality of aluminum alloy extruded shape members. The body structure blocks of the railway car are formed into determined shapes by attaching the side ends (width-direction ends) of long extruded shape members.

The width size of the extruded shape member is limited due to structural restrictions, but the length thereof can be as long as approximately 25 m, and such extruded shape member is manufactured through extrusion. There are two types of extruded shape members, a plate type, and a hollow type with a hollow cross-section. A member formed by joining the plate-type or hollow-type extruded shape members (hereinafter simply referred to as extruded shape members) is called a body structure block.

The plural extruded shape members constituting the body structure block are joined together via friction stir welding, MIG welding or the like.

The details of friction stir welding are disclosed for example in US-A-6 581 819. A method of arraying plural extruded shape members and welding the same is disclosed in JP-A-2002-160077.
Patent Application No. 2002-160077

In order to subject the extruded shape members to friction stir welding, it is necessary to securely fix the plural extruded shape members to be welded onto a bed. Therefore, it is necessary to prepare a large bed and to arrange and fix the extruded shape members on the bed.

There are various types of railway cars having bodies that vary in size and shape, and the outer surfaces of the railway car body structure are not always flat, but curved. As described earlier, the railway car body structure is composed of six body structure blocks, which are an underframe that constitutes the floor of the car, side structures to be disposed on left and right sides of the car, a roof structure to be attached to the top, and end structures to be disposed at the longitudinal ends of the body. The underframe, the side structures and the roof structure are generally formed by arraying a plurality of extruded shape members (including hollow shape members) in the longitudinal direction of the car body, and welding or friction stir welding the width-direction ends of the extruded shape members together. The process of welding or friction stir welding is hereinafter simply referred to as welding.

When forming the underframe with extruded shape members, the members must be welded together from both the upper and lower sides of the underframe. Generally, both the upper and lower surfaces of the underframe are flat. After welding one side of the underframe, the underframe is turned over, but the other side is also flat. Therefore, a single bed can be used commonly to carry out the welding process of both the upper and lower sides of the underframe.

However, as for the roof structure, the center of width thereof is protruded substantially circularly to the upper direction. The roof structure has a substantially arced cross-section in the width direction. Thus, when turning the body structure block over and placing the same on the bed, the upper face of the bed must be concaved in the width direction and opened toward the upper direction so as to receive this circular portion. Therefore, the bed used for welding the upper side of the roof structure cannot be used commonly as the bed for welding the lower side thereof. This increases the number of required beds, and increases the costs. Since the side structure also has awidth-direction cross-section that is curved outward, similar to the roof structure, the bed for processing the inner side cannot be used commonly for processing the outer side of the side structure.

Therefore, when manufacturing a single railway car body structure, a total of five beds, one for the underframe, two for the roof structure and two for the side structure, must be prepared. Thus, the manufacture plant must be large enough to store such number of beds, and the facility costs become expensive.

If the body structure block is flat, one bed can be used commonly for processing both the upper and lower sides of the block. However, if the cross-sectional shape of the body structure block in the width direction is either arced or curved, it is not possible to used one bed commonly for processing the upper and lower sides thereof. Further, if the width size of the body structure block differs according to car type, the bed cannot be used commonly. Especially in the case of a side structure, the width-direction cross-section is substantially arced and protrudes outward, so it is not possible to use one common bed to weld both sides thereof.

German Utility Model 29501340.0 describes an apparatus for supporting elongate members being welded together in the manufacture of a railway car. The apparatus has support units spaced in the longitudinal direction of the members. Each support unit has vertically adjustable and tiltable elements for supporting the members at their joining lines extending in the longitudinal direction. This document discloses an apparatus having the features of the preamble/first part of claim 1. German Utility Model 20319159 describes a similar construction.

JP-A-2002-160077 illustrates a bed for support of members to be joined by friction stir welding. The bed is formed of plates having curved upper support surfaces in which there are recesses containing beams extending along the joint lines of the members.

### SUMMARY OF THE INVENTION

The object of the present invention is to provide a method and apparatus for manufacturing a body structure block, which enables welding of both sides of a plurality of extruded shape members constituting the body structure block on a single bed, even if the body structure block has a curved cross-section.

The present invention provides apparatus for use in manufacturing a body structure block, as set out in claim 1.

The present invention further provides a method of manufacturing a body structure block as set out in claim 8.

In the present invention, the plurality of joint supporters used for processing long works can be arranged both flatly and curved to correspond to the shapes and sizes of various body structure blocks for forming the various types of cars, enabling the bed itself and the welding device to be used commonly, according to which the costs of the facility for manufacturing body structure blocks are reduced and manufacturing efficiency is enhanced.

### BRIEF DESCRIPTION OF THE DRAWINGS

FIG. 1 is a perspective view showing the apparatus for manufacturing a body structure block according to the present invention;
FIG. 2 is a schematic view showing the supporting bed illustrated in FIG. 1 from the X-axis direction;
FIG. 3 is a schematic view showing the state in which a structure block WB is mounted on the supporting bed illustrated in FIG. 2;
FIG. 4 is a front view showing the detailed structure of the supporting bed illustrated in FIG. 3 from the X-axis direction;
FIG. 5 is a front view showing the detailed structure of the supporting unit from the X-axis direction;
FIG. 6 is a perspective view showing the detailed structure of the supporting unit;
FIG. 7 is an exploded plan view showing the coupling portion of the work beds;
FIG. 8 is a plan view showing the coupled state of FIG. 7; and
FIG. 9 is a front view of FIG. 8 seen from the X-axis direction.

### DETAILED DESCRIPTION OF THE PREFERRED EMBODIMENT

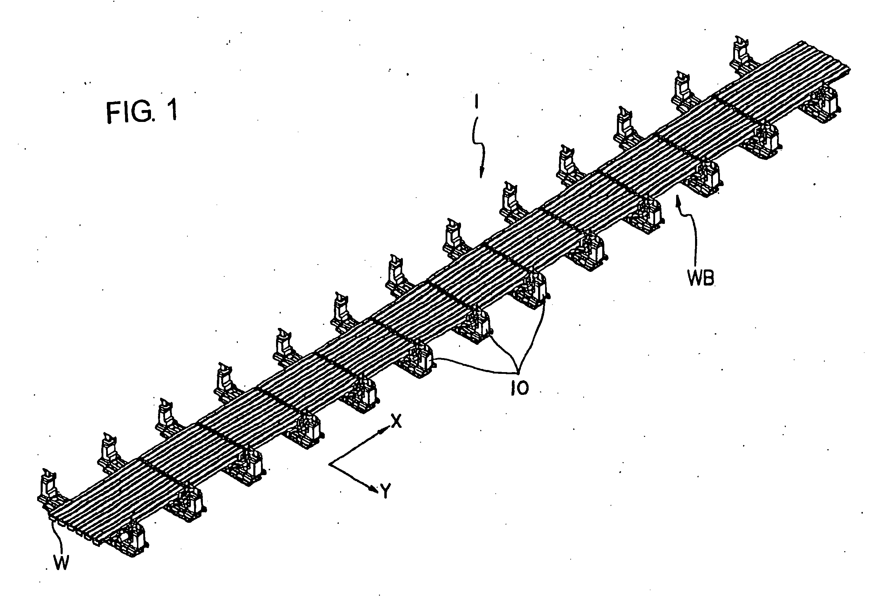

FIG. 1 is a perspective view showing the whole structure of the apparatus for manufacturing a body structure block according to the present invention. In the following description, the longitudinal direction of the body structure block is referred to as the X-axis direction, the width direction of the block is referred to as the Y-axis direction, and the perpendicular direction orthogonal to the X-axis and Y-axis directions is referred to as the Z-axis direction. In FIG. 1, the manufacturing apparatus 1 is composed of a plurality of supporting beds 10, and the beds are arranged along the X-axis direction of the body structure block WB at predetermined intervals. A plurality of works W extending in the X-axis direction of the body structure block WB are mounted on a plurality of supporting units constituting the supporting beds 10. The works W mounted on the supporting beds 10 in this manner are welded together via friction stir welding or other welding methods. The works W are longitudinal in the X-axis direction, and the longest ones are substantially as long as the total length of the railway car body structure. The plural works W are arrayed in parallel along the width direction thereof, or Y-axis direction. The interval between the supporting beds 10 in the X-axis direction is approximately 1 m. FIG. 1 illustrates the state in which the body structure block WB is mounted on the supporting beds 10, so the works W constituting the block WB can be seen, but the supporting units 30 positioned beneath the works W cannot be seen.

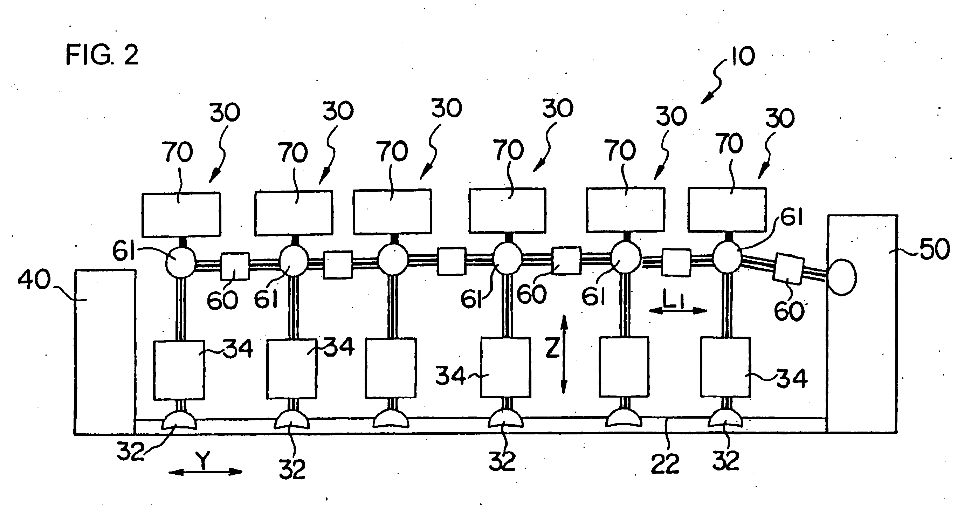

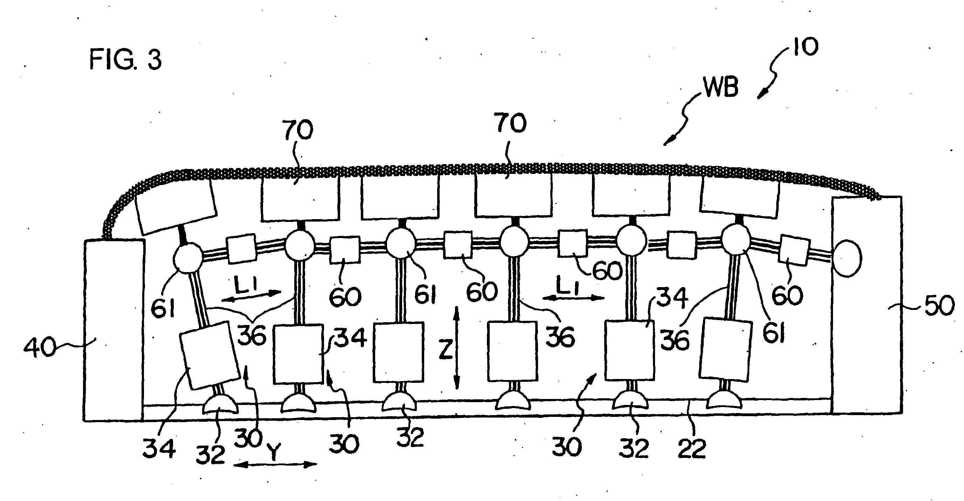

FIGS. 2 and 3 are front elevational views schematically showing the supporting bed 10. FIG. 2 shows a state in which the supporting bed 10 is supporting nothing, and FIG. 3 shows a state in which the supporting bed 10 is supporting a body structure block WB (such as a side structure). As shown in FIG. 2, the supporting bed 10 is constituted of clamp units 40 and 50 disposed at both ends of the bed in the Y-axis direction, and six supporting units 30 disposed between the two clamp units 40 and 50. Each supporting unit 30 comprises a nut device 32 for adjusting the position of the unit in the Y-axis direction, an expansion device 34 disposed above the nut device 32, and a support stage 70 disposed above the expansion device.

The nut device 32 is screwed onto a screw member 22 disposed on a base, and enables the supporting units 30 to be moved in the Y-axis direction along the screw member 22. The screwmember 22 is disposed so that its axis is arranged in the Y-axis direction. The expansion device 34 realizes a function to adjust the height of the support stage 70. The supporting units 30 are connected via coupling units 60. Each coupling unit 60 is equipped with a function to adjust the distance L1 between adjacent supporting units 30. By adjusting the distance between the upper portions and the lower portions of the supporting units 30, the inclination of the upper surface of the support stages 70 can be controlled arbitrarily. That is, if the block WB is a side structure, by adjusting the positions of the nut devices 32 and the lengths of the coupling units 60, the inclination of the upper surfaces of the support stages 70 can be arranged to correspond to the inner surface of the side structure.

According to FIGS. 2 and 3, the structure of clamp units 40 and 50 are not illustrated in detail, but they are equipped with a nut device screwed onto the screw member 22, enabling the positions of the clamp units in the Y-axis direction to be adjusted. One clamp unit 50 is coupled to the adjacent supporting unit 30 via the coupling unit 60. The other clamp unit 40 is not connected to the adjacent supporting unit 30, and the position of the clamp unit 40 can be adjusted independently along the Y-axis direction. The clamp units 40 and 50 are each equipped with an expansion device, and can support a work W. The clamp units 40 and 50 support the Y-axis ends of the work W, and they are not required to have their inclinations adjusted. Thus, there is no need for the clamp unit 40 to be coupled to the support unit 30, if at least the clamp unit 50 is coupled to the supporting unit 30.

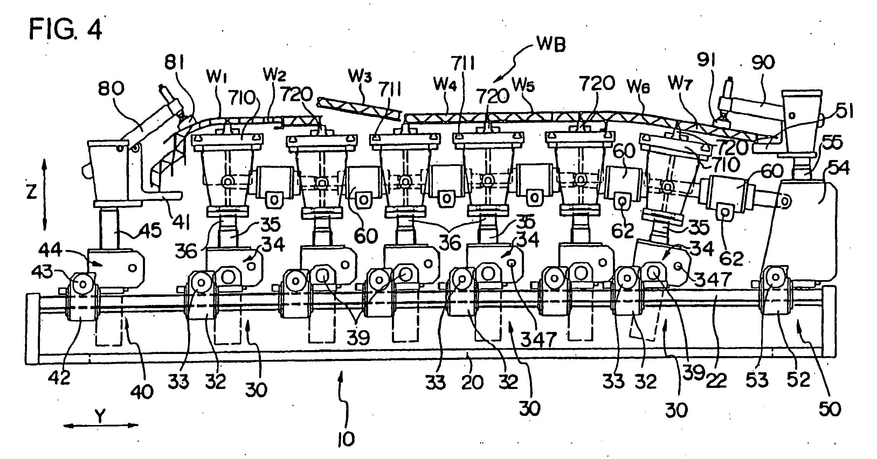

FIG. 4 is a front elevational view showing the detailed structure of the support head 10. In FIG. 4, seven works W, which are extruded hollow shape members W₁ through W₇ , are welded to form a body structure block WB (for example, a side structure). The extruded hollow shape members W₂ through W₅ in the drawing have flat upper and lower surfaces, and the upper and lower surfaces of each member are parallel. As for extruded hollow shape members W₁, W₆ and W₇, the cross-sectional shapes in the direction of their widths are curved. The underframe has a cross-sectional shape in the direction of width similar to the shapes of shape members W₂ through W₅.

The supporting bed 10 is equipped with a screw member 22 having both ends fixed above a base 20. A plurality of support units 30 are attached via nut devices 32 to the screw member 22. The screw member 22 is arranged so that its axial direction corresponds to the Y axis, enabling the support units 30 to move in the direction of the Y axis through the movement of the nut devices 32 on the screw member 22. According to the embodiment illustrated in FIG. 4, six support units 30 are equipped. The number of works W is seven, so there are six butted portions (weldingportions) in the extruded hollow shape members W₁ through W₇. The support units 30 are arranged to correspond to each of the six butted portions. Of course, if the number of hollow shape members constituting the body structure block WB differs from the illustrated embodiment, the number of support units being disposed will be increased or decreased accordingly.

The screw member 22 itself does not rotate, having both ends fixed to the base 20. The nut device 32 is threadablymounted to the screw member 22. The nut device 32 rotates around the screw member 22 via a rotary drive unit 33, by which it moves the support unit 30 in the Y-axis direction along the screwmember 22. An expansion device 34 is attached to the nut device 32.

The expansion device 34 is disposed with its direction of expansion arranged in the perpendicular direction (Z-axis direction). The expansion device 34 is equipped with an expansion shaft 36, the shaft 36 arranged so that its upper end is protruded above the expansion device 34, and capable of being moved along the Z-axis direction. On the upper end of the expansion shaft 36 is disposed a support stage 70, the height of the support stage 70 being determined by the movement of the expansion shaft 36 in the Z-axis direction.

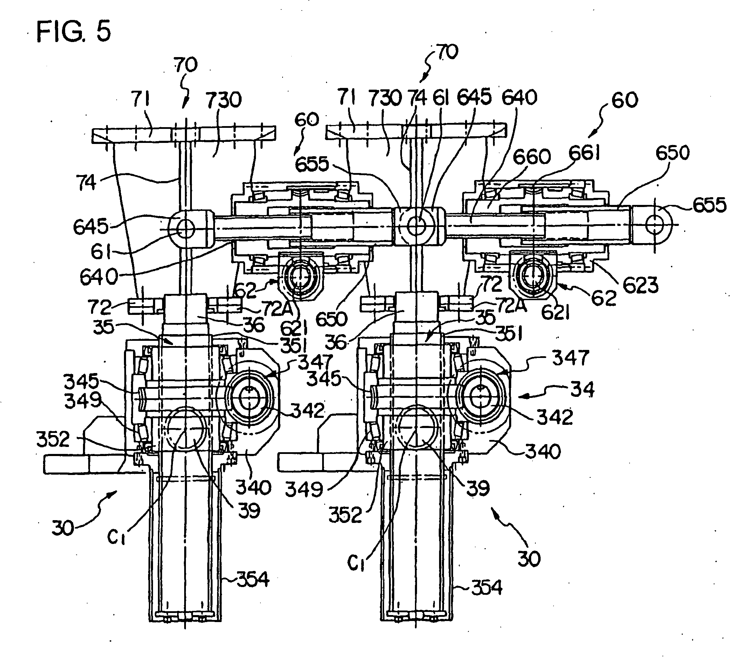

The detailed structure of the expansion device 34 will now be explained with reference to FIG. 5. In FIG. 5, the expansion shaft 36 is equipped with a screw jack 35. The screw jack 35 is composed of an external thread member 351 disposed to the outer circumference of the expansion shaft 36 , an internal thread member 352 threadably mounted to the external thread member 351, a worm wheel 345 disposed to the outer circumference of the internal thread member 352 to rotate the internal thread member 352, and a rotary drive shaft 347 equipped with a worm 342 for rotating the worm wheel 345. The axial centers of the worm 342 and rotary drive shaft 347 are arranged orthogonally with respect to the expansion shaft 36. A bearing 349 is disposed to the outer circumference of the internal thread member 352, and via the bearing 349 is disposed a worm case 340 housing the worm 342 and the rotary drive shaft 347. Below the worm case 340 is disposed a cover 354 for covering the lower end of the external thread member 351. The support stage 70 is attached to the upper end of the expansion shaft 36.

The adjusting of height of the expansion device 34 is performed by expanding the screw jack 35. That is, by rotating the rotary drive shaft 347, the worm 342 is rotated, along with which the worm wheel 345 is rotated. Along with the rotation of the worm wheel 345, the internal thread member 352 is rotated, and the external thread member 351 is moved perpendicularly. By changing the direction of rotation of the rotary drive shaft 347, the expansion shaft 36 can be switched from ascending movement to descending movement. By using a servomotor to move the rotary drive shaft 347, and by performing numerical control of the servomotor, the amount of expansion of the expansion shaft 36 can be controlled.

By controlling the amount of expansion of the expansion device 34 of each of the support units 30 to correspond to the heights of the weld portions between adjacent works W, the works W can be positioned appropriately. When forming an underframe, the heights of the support stages 70 disposed above the expansion devices 34 are equal since the structure is flat. When forming a side structure, the cross-sectional shape in the width direction thereof is usually curved, so the heights of the expansion shafts 36 on both width-direction ends thereof are differed from the other expansion shafts 36. Further, upon manufacturing a side structure, after welding a first side of the structure block and turning over the block, the heights of the support units 30 on both Y-axis direction ends can be changed so as to arrange the support stages 70 to correspond to the shape of the turned structure block with a curved cross-sectional shape.

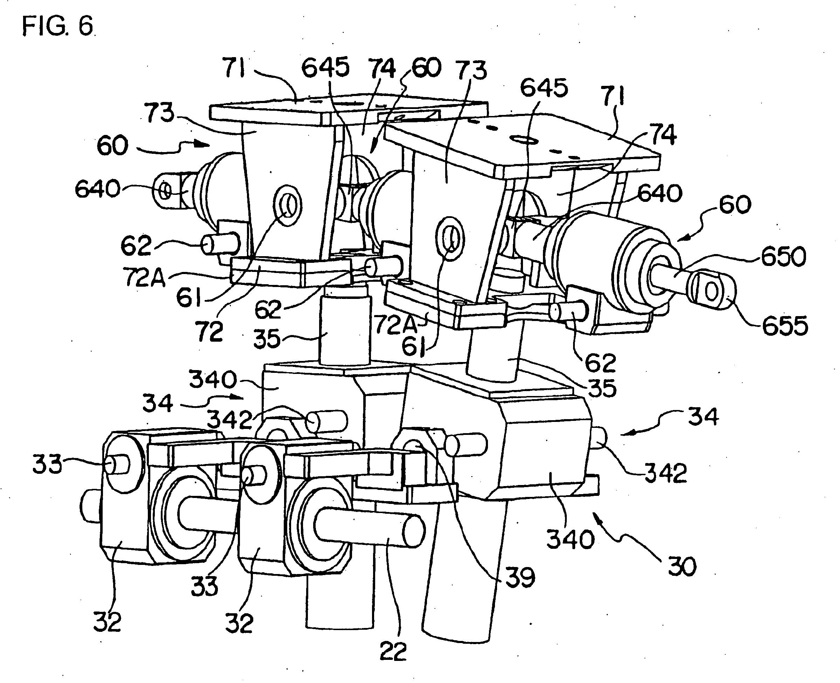

FIGS. 5 and 6 are referred to in describing the relationship between the expansion device 34 and the nut device 32. A pin 39 is disposed on a side surface of the worm case 340 constituting the expansion device 34 close to the nut device 32. The pin 39 is disposed so that its center axis is arranged along the X-axis direction, and it is rotatably fit to a receive member formed to the nut device 32. Accordingly, the expansion device 34 is capable of rotating with respect to the nut device 32 with the pin 39 placed at the center of rotation. The center of rotation is C₁. When the length of the coupling unit 60 is varied, the expansion shaft 36 rotates around center C₁, according to which the inclination angle of the expansion shaft 36 to the screw member 22 is changed. Since the expansion shafts 36 of the plural supporting units 30 arranged along the Y-axis direction are mutually coupled via the plural coupling units 60, the angles of the expansion shafts 36 can be adjusted arbitrarily by changing the lengths of the coupling units 60.

The detailed structure of the support stage 70 will now be described with reference to FIGS. 5 and 6. In FIGS. 5 and 6, the support stage 70 is constituted of an upperplate 71 defining the upper surface, a lower plate 72 defining the lower surface, two side plates 73 connecting the upper and lower plates, and a center plate 74 connecting the two side plates. The upper plate 71, the lower plate 72, the two side plates 73 and the center plate 74 are joined together via welding. The center plate 74 is disposed between left and right side plates 73 and sandwiched between upper and lower plates 71 and 72, arranged orthogonally to each of the plates. The lower plate 72 is attached to a support plate 72A welded to the upper end of the expansion shaft 36 of the screw jack 35. The upper plane of the upper plate 71 is flat, which is horizontal when the expansion shaft 36 is positioned perpendicularly. The upper plate 71 is quadrangle when seen from above, and the side plates 73 are disposed so as to drop perpendicularly from two sides of the quadrangle. The opposing side plates 73, 73 are equipped with a pin 61 passed horizontally through the two plates and connected to the coupling unit 60. The axis of the pin 61 is disposed along the X-axis direction. The center plate 74 has an opening corresponding to the pin 61 and the coupling portion between the coupling unit 60 and pin 61.

A work bed 710 is disposed on the upper face of the upper plate 71 of the support stage 70, as shown in FIG. 4. This work bed 710 is long, having a length corresponding to the distance between two adjacent support beds 10. The work bed 710 is arranged so that its longitudinal direction corresponds to the X-axis direction. One end of the work bed 710 is supported by the support stage 70 of one of the two adjacent support beds 10, and the other end of the work bed is supported by the support stage 70 of the other one of the adjacent support beds 10. In other words, the work bed 710 is bridged across adjacent support beds 10, and a plurality of work beds 710 are arranged in the X-axis direction to support the joint portion between long works W. The work beds 710 are disposed so as to connect the space between support units 30, and a plurality of work beds 710 are designed to support long works W.

On the upper face of the work bed 710 is disposed a joint supporter 720 having a narrow width in the Y-axis direction. The X-axis direction length of the joint supporter 720 is equal to the distance between one supporting unit 30 and the adjacent supporting unit 30, which is similar to the work bed 710. The two adjacent work beds 710 and two adjacent joint supporters 720 are coupled at the support stage 70 of the support unit 30. The joint supporter 720 directly supports the butted portion (portion to be welded) of two works W, W to be joined together. A small gap is created between the two joint supporters 720 arranged adjacent one another in the X-axis direction. This gap is designed to prevent displacement or other problems from occurring by the ends of two joint supporters 720 coming into contact with each other when the plural work beds 710 connected along the X-axis direction are curved in the Y-axis direction to create a camber to the body structure block WB as described in detail later. Further, the gap between the joint supporters 720 should be designed so as not to cause any problem when welding the works W via friction stir welding or other welding methods.

The detailed structure of the coupling unit 60 for coupling the supporting units 30 of the supporting bed 10 will now be described with reference to FIGS. 5 and 6. As illustrated in FIG. 5, the coupling unit 60 is composed of two screw shafts 640, 650 disposed in series, a nut unit 660 threadably mounted to both screw shafts, and a rotary drive unit 62 for driving the nut unit 660. A right-hand screw is formed to the outer circumference of one screw shaft 640, and a left-hand screw is formed to the outer circumference of the other screw shaft 650. The screw shaft 650 is cylindrically shaped so as to receive the end of the screw shaft 640. The screw shafts 640, 650 and the nut unit 660 are assembled so that the centers of axes thereof correspond. By rotating the nut unit 660 with respect to the screw shafts 640 and 650, the end of the screw shaft 640 can be inserted to or separated from the cylindrical screw shaft 650. A worm wheel 661 is disposed to the outer circumference of the nut unit 660, and a worm 621 arranged orthogonally to the worm wheel 661 is driven by the rotary drive unit 62. The nut unit 660 is housed rotatably in an expansion unit case 623 via a bearing disposed at the outer circumference thereof. The screw shafts 640 and 650 are also housed in the expansion unit case 623, and the ends of the screw shafts 640 and 650 equipped with the joints are protruded from the expansion unit case 623. The worm 621 and the rotary drive shaft 62 are also disposed to the expansion unit case 623. The joint 645 formed to the end of the screw shaft 640 is connected to the support stage 70 of one of the support units 30 being coupled. The joint 655 formed to the end of the screw shaft 650 is connected to the support stage 70 of the other support unit 30 being coupled. The joints 645 and 655 are connected to the pin 61 on each support stage 70, and the connecting portion can be rotated around the pin 61. A pin 61 is inserted horizontally from the outer side of the side plate 73 of the support stage 70 to the joints 645 and 655 at the ends of screw shafts 640 and 650, by which the support unit 30 and the coupling unit 60 are connected. The pin 61 is inserted in the X-axis direction.

The distance between adjacent support units 30 in the Y-axis direction corresponds to the width size of the work W or extruded shapemember. The width of a typical hollow extruded shape member is approximately around 300 mm to 500 mm, so the distance between adjacent support units 30 is relatively narrow and adjusted to correspond to the width of the hollow shape members. Accordingly, the end of the screw shaft 640 constituting the coupling unit 60 is arranged to be stored in the cylindrical screw shaft 650 so as to adjust the interval between even very narrowly spaced adjacent supporting units 30.

The Y-axis distance between two adjacent supporting units 30 is adjusted by the expanding and contracting of the coupling unit 60. Further, the distance between lower portions of two adjacent supporting units 30 are adjusted by moving the nut unit 32 with respect to the screw member 22. Thus, by varying the distance between the upper and lower portions of two adjacent supporting units 30 via the nut device 32 and the coupling unit 60 , the inclination angle of each support unit 30 can be controlled. By tilting the supporting unit 30, the upper plate 71 on the support stage 70 is also inclined. Through the operation of the expansion devices 34 on the support units 30, the height of the supports 70 can be controlled arbitrarily. Thus, the height and inclination angle of the joint supporter 720 for supporting the butted portions of the works W to be welded can be controlled arbitrarily. Moreover, the upper plane of the joint supporter 720 can be retained at a position orthogonal to the portion to be welded or butted portion of the works W. As explained above, the joint supporter 720 on the support units 30 can be arranged to correspond to the completed shape of the body structure block WB. At this time, the joint supporter 720 is located along the axis of the expansion shaft 36, so as to support the pressure caused by the insertion of the rotary tool for friction stir welding to the joint portion on the axis of the expansion shaft 36.

The force of insertion of the rotary tool of a friction stir welding device (not shown) for welding the adjacent works W, W is received by the joint supporter 720, the work bed 710, the support stage 70, the expansion device 34, the nut device 32 and the screw member 22. The screw member 22 is provided with sufficient strength so that it will not bend easily by the force of insertion of the rotary tool during friction stirwelding. When there is still fear of bending of the screw member 22, it is possible to insert a support member between the screw member 22 and the base 20 disposed below. The nut device 32 and the expansion device 34 are displaced from each other in the X-axis direction, so the force of insertion of the rotary tool causes a component force that may push over the expansion device 34 in the X-axis direction, but since the support units 30 adjacent to one another in the X-axis direction are connected via work beds 10, the component force can be received and supported mutually.

In the drawing of FIG. 4, the screw jack 35 on the rightmost supporting unit 30 that supports the butted portion between the extruded hollow shape members W₆ and W₇ is inclined to correspond to the inclination of the butted portion of the extruded hollow shape members W₆ and W₇. The screw jack 35 on the supporting unit 30 disposed on the left side thereof is perpendicular. The support units 30 are arranged to correspond to the cross-sectional shape in the X-axis direction of the extruded hollow shape members W₆ and W₇ constituting the body structure block WB (side structure).

Two clamp units 40 and 50 are disposed on both sides in the X-axis direction of the base 20 of the support bed 10. The detailed structure of the clamp units 40 and 50 will be described with reference to FIG. 4. In FIG. 4, a first clamp unit 40 on the left side is equipped with a nut device 42 disposed on the lower area thereof, which is threadably mounted to the screw member 22. A second clamp unit 50 on the right side is equipped with a nut device 52 disposed on the lower area thereof, which is threadably mounted to the screw member 22. The nut devices 42 and 52 are similarly structured as the nut device 22 of the support unit 30. The clamp units 40 and 50 are equipped with expansion devices 44 and 54, similarly as the support unit 30, and each expansion device 44 and 54 is respectively equipped with an expansion shaft 45 and 55.

The left and right clamp units 40 and 50 are equipped with receive seats 41 and 51 attached to the upper ends of the expansion shafts 45 and 55, respectively. The receive seats 41 and 51 are equipped with clamp arms 80 and 90 for pressing down and holding the works W from above. At the tip of the clamp arms 80 and 90 are disposed clamp pads 81 and 91 for holding the works W. The clamp arms 80 and 90 are capable of rotating in the vertical direction via a rotary drive unit (not shown).

The clamp unit 40 on the left side clamps to the joint supporter 720 of the adjacent support unit 30 one end of the extruded hollow shape member W₁, which for example is the part constituting the side body structure block WB to be joined to the roof structure. It also clamps the other end of the extruded hollow shape member W₁ to the receive seat 41 of the clamp unit 40.

The clamp unit 50 on the right side clamps one end of the extruded hollow shape member W₇, which is the part constituting the side body structure block WB to be joined to the underframe, to the joint supporter 720 of the adjacent support unit 30. It also clamps the other end of the extruded hollow shape member W₇ to the receive seat 51 of the clamp unit 50.

Since the clamp unit 40 holds the extruded hollow shape member W₁ which has a Y-axis cross-sectional shape curved greatly toward the inner side of the side structure (bottom side of the Z-axis direction in the drawing), the receive seat 41 thereof is maintained at a position lower than the work bed 710 of the support unit 30 adjacent thereto. The position of the receive seat 41 is lower than the position of the receive seat 51 of the other clamp unit 50. The position of the receive seat 41 can be adjusted via the expansion device 44 to correspond to the cross-sectional shape of the work W. Further, the position of the receive seat 51 can also be adjusted similarly as the receive seat 41 via the expansion device 54 to correspond to the supporting position of the work W.

According to this arrangement, the support units 30 and the clamp units 40 and 50 for supporting the extruded hollow shape members W₁ through W₇ can be positioned accurately, even if the body structure block WB has a curved cross-section along the Y-axis , as in the case of the side car body structure. In other words, by controlling the expansion devices 34, 44 and 54 of the support units 30 and the clamp units 40 and 50, the expansion shafts 36, 45 and 55 can be expanded/contracted to adjust the heights of the work beds 70 and the receive seats 41 and 51. Furthermore, the positions and inclination angles of the joint supporters 720 of the support units 30 can be controlled accurately through control of the nut devices 32 and the coupling units 60. Furthermore, the Y-axis positions of the receive seats 41 and 51 of clamp units 40 and 50 can be controlled accurately by the nut devices 42 and 52. Thus, the joint supporters 720 can be arranged in accurate positions with the inclination angles adjusted to correspond accurately to the backs of the butted portions of the extruded hollow shape members W₁ through W₇.

The clamp unit 50 on the right end and the supporting unit 30 adjacent thereto are coupled via the coupling unit 60, and the right end clamp unit 50 is designed so as not to be tilted. There is no coupling unit 60 disposed between the clamp unit 40 on the left end and the supporting unit 30 adjacent thereto, and the distance between the two units are adjusted and maintained by the nut devices 32 and 42 respectively equipped to the units.

The butted portions on the Y-axis ends of the extruded hollow shape members W₁ through W₇ are the portions to be joined together, and these portions are placed on the joint supporters 720 on the upper face of the support stages 70. The joint supporters 720 are disposed along the center of axis of the expansion shafts 36. Therefore, even if the insertion force of the rotary tool during friction stir welding is large, the expansion shafts 36 will not buckle.

Although not shown in the drawing, a linear guide is disposed along the screw member 22, so that the nut devices 32, 42 and 52 and the support units 30 and the clamp units 40 and 50 will not rotate, but move in the Y-axis direction when the nut portions of the nut devices 32, 42 and 52 are rotated.

According to this arrangement, even if the structure block WB being the work W has a curved cross-section along the Y axis like in the case of the side structure, the inclination angles of the plural supporting units 30 corresponding thereto can be adjusted so as to place the joint supporters 720 accurately to the backs of the butted portions of the extruded hollow shape members.

The apparatus for manufacturing the body structure block according to the present invention uses a servomotor as the means for driving the driving mechanism for the clamp units and supporting units, and by performing numeric control of all the servomotors, the positions of the supporting portions and clamps can be controlled accurately to correspond to various sizes and different curves of the structures.

By this function of the invention, the steps related to supporting the works constituting the structure block or the setup steps of the clamps can be cut down effectively, and the productivity of the device can be enhanced.

Now, we will explain the case where the body structure block WB composed of plural works W is formed via welding instead of friction stir welding. When welding a first surface of the structure block WB, the extruded hollow shape members W₁ through W₇ are placed on the supports units 30 and clamp units 40 and 50 and restrained thereto, while the butted portions on the joint supporters 720 are welded from above. After welding one side of the structure block WB, the block WB is turned over and mounted oppositely on the joint supporters 720. When positioning the welded side of the structure block WB on the bottom and the yet to be welded side on the upper side, the weld portions of the block WB are displaced from the joint supporters 720 and the area near the weld portions are mounted on the supporters 720. This is to prevent the height of the upper side (yet to be welded side) from being uneven, since the welded side of the block WB may have projections caused by the weld beads, and since the height of the projections may not be even. Thus, when welding the extruded hollow shape members W₁ through W₇ to form the body structure block WB, the welded portions on the block WB turned over on the support units are displaced from the joint supporters 720, so as to make the height of the joints on the upper side surface as even as possible. Thus, the deviation of the heights of the butted portions between works to be welded to form the structure block WB can be minimized, and weld defects can be cut down.

The receive seats 41 and 51 can be omitted if the width of the extruded hollow shape members W₁ and W₇ overhung from the work beds 710 is small.

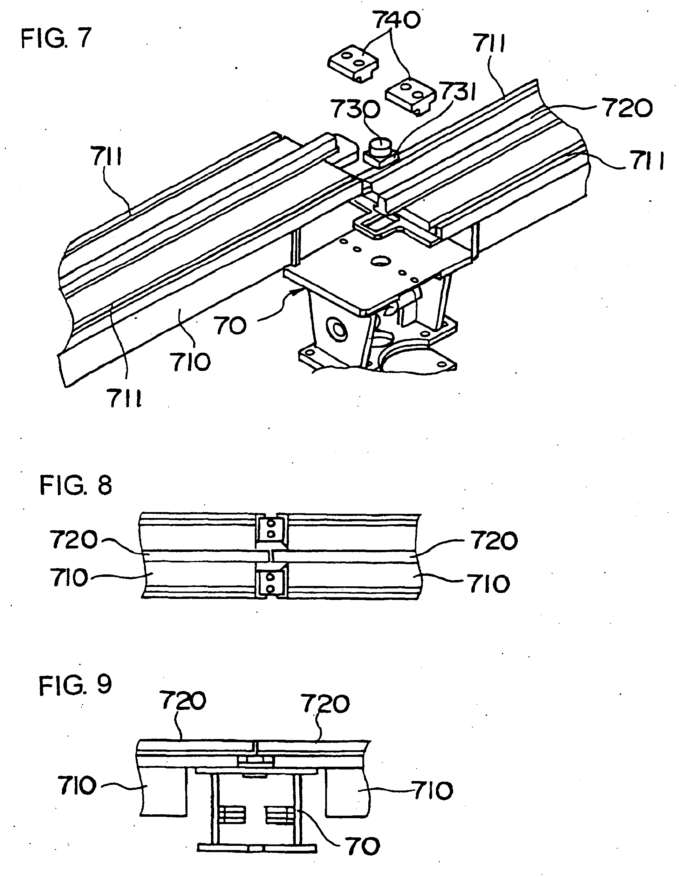

An example of a manufacturing device for processing a body structure block WB having a camber will now be described with reference to FIGS. 7, 8 and 9. Generally, the side structure of a railway car body is provided with an approximately 20 mm camber, so that the longitudinal center area is protruded upward than the end portions thereof. In order to manufacture such side structure from a plurality of extruded hollow shape members, the camber cannot be formed if the extruded hollow shape members are arranged linearly along the X-axis direction. Therefore, the plurality of work beds 710 arranged along the X-axis direction must be curved in the Y-axis direction while having the plural extruded hollow shape members mounted on the support units and clamped thereto.

The joint supporter 720 is fixed on the work bed 710 having a flat upper surface. The joint supporter 720 is fixed along the X-axis direction of the work bed 710. The X-axis end of the work bed 710 is fixed to the upper surface of the support stage 70 via a pin 730. The upper and lower ends of the pin 730 are inserted to the support stage 70 and the work bed 710. The axis of the pin 730 is arranged in the Z-axis direction. The work bed 710 can be rotated horizontally, with the center of rotation at the axis of the pin 730. The pin 730 has a large-diameter portion 731 at the axial center portion thereof, which is fixed via a screw to the upper surface of the support stage 70. The screw is inserted from above. On the upper end of the pin 730 is mounted the end of a work bed 710 adjacent thereto in the X-axis direction. The X-axis end of the work bed 710 is projected in the X-axis direction than the X-axis end of the joint supporter 720, and this projected portion is secured via the pin 730.

Restraining plates 740, 740 are disposed on both Y-axis ends of the above-mentioned projected portion for holding down the work beds 710, 710. Each restraining plate 740 fixes the work beds 710, 710 to the support stage 70 using two screws. The joint supporter 720 is fixed on the flat work bed 710. Both ends of the work bed 710 are mounted on the upper surfaces of support stages 70 of the supporting units 30 adjacent to one another in the X-axis direction.

Since the joint supporter 720 and the work bed 710 are pushed downward by the force of insertion of the rotary tool when welding the works W via friction stir welding, the center portion thereof in the X-axis direction (portion excluding the longitudinal ends) may be bent down, but the work bed 710 itself is formed to have sufficient strength so as not to bend by the force of insertion of the rotary tool. When carrying out friction stir welding, the work bed 720 is anticipated to bend even when it has sufficient strength, but the strength of the work bed 720 is determined so that this unavoidable deformation of the bed is minimized so as not to affect the friction stir welding process.

According to this arrangement, the positions of the nut devices 32 of the support units 30 along the screw member 22 are determined, the lengths of the coupling units 60 are determined, and the works W mounted on the plural work beds 710 are restrained in position. Then, the positions of the plural support beds 10 arranged along the X-axis direction are displaced in the Y-axis direction to correspond to the camber of the structure block WB, according to which the joint supporters 720 are curved so as to provide the necessary camber to the structure block WB.

Grooves 711 are formed to the upper surface of the work bed 710 for retaining the work W. In other words, grooves 711 are formed to both Y-axis ends of the work bed 710 in the X-axis direction. As shown in FIG. 4, the grooves 711 are substantially trapezoidal. The grooves 711 allow the top of the T-shaped portion of a T bolt to be inserted thereto. When welding works W mounted on the bed and having the window portion of the car body opened, the works W can be fixed securely to position by inserting the T bolts to the grooves 711 and holding down the works W.

The above description explained the example for forming a car body structure of a railway car as the structure block, but the present invention is not limited to this example, and the same advantageous effects of the invention can be realized when forming any general structure by welding together plural extruded hollow shape members.

## Claims

1. An apparatus for manufacturing a body structure block by arraying elongate workpieces (W) alongside each other and welding them together, comprising:
a plurality of supporting beds (10) arranged along an X-axis corresponding to the longitudinal direction of the workpieces (10),
each said supporting bed (10) having a plurality of supporting units (30) arranged in a row in a Y-axis direction orthogonal to said X-axis direction, said supporting units (30) each carrying a joint supporter (70) and including an expansion device (34) for moving said joint supporter (70) in a Z-axis direction orthogonal to said X- and Y-axis directions, and said supporting units (30) being adjustable in their inclination to said Z-axis direction,
**characterised in that**
each said supporting bed (10) has a screw member (22) fixed so that its axial direction is in said Y-axis direction,
a plurality of nut devices (32) are threadably mounted to said screw member (22) and capable of being moved along said screw member (22),
said supporting units (30) are respectively connected to said nut devices (32) so that said supporting units (30) can be inclined in the Y-axis direction,
said supporting bed (W) is equipped with clamp units (40, 50) disposed at Y-axis ends of said row of said plural supporting units (30), and coupling units (60) disposed between said plurality of supporting units (30) and between one said supporting unit (30) and one of said clamp units (40, 50) for adjusting the distances between said supporting units (30) and
said coupling units (60) are connected to said supporting units (30) and said one of said clamp units (40, 50) so as to be relatively rotatable in the plane of the Y- and Z-axes.

2. The apparatus according to claim 1, wherein said expansion device (34) of each said supporting unit (30) is a screw jack (35) supported with respect to said nut device (32), and said joint supporter (70) is disposed on an upper portion of said screw jack (35).

3. The apparatus according to claim 1 or 2, wherein said clamp units (40, 50) are each equipped with a screw jack (45, 55) having a rotation axis disposed in the Z-axis direction and a clamp head (80, 90) disposed to an upper portion of the screw jack (45, 55) for pressing the workpiece (W) onto said clamp unit (40, 50).

4. The apparatus according to any one of claims 1 to 3, wherein said coupling units (60) are each equipped with a nut member (660), a screw shaft assembly threadably mounted to the nut member (660), and a drive mechanism (62) for rotating the nut member (660), wherein said screw shaft assembly comprises a first screw shaft (640) connected to either another said support unit (30) or one of said clamp units (40, 50), the end of said first screw shaft (640) being inserted to the second screw shaft (650), and said nut member (660) being mounted to screw threads formed at the outer surface of said first and second screw shafts (640, 650).

5. The apparatus according to any one of claims 1 to 4, wherein a rotary drive mechanism for driving said nut devices (32), said expansion devices (74) and said coupling units (60) are servomotors.

6. The apparatus according to any one of claims 1 to 5, wherein said clamp unit (40, 50) has a seat (41, 51) for supporting an end portion of said workpiece (W).

7. The apparatus according to any one of claims 1 to 6, wherein a work bed (710) is disposed on an upper surface of said supporting unit (30), and said joint supporter (720) for supporting a butted portion of the workpieces is disposed on an upper surface of said work bed (710), wherein said work bed (710) has a long shape arranged along the Y-axis direction of the workpieces (W), with one longitudinal end fixed to one said supporting unit (30) and the other longituindal end rotatably fixed via a pin (730) to an upper surface of a said supporting unit (30) of an adjacent said supporting bed (10), with a longitudinal end of an adjacent work bed (710) superposed on an upper surface of said pin (730), and restraining plates (740) are disposed on left and right sides of said pin (730) for holding down the longitudinal end of said work bed (710) from above and are fixed to the upper surface of said supporting unit (30).

8. A method of manufacturing a body structure block wherein an apparatus according to any one of claims 1 to 7 is used to hold a plurality elongate workpieces (W) which are to be welded together to form said block, said plurality of workpieces being mounted and fixed to said joint supporters (720) of said supporting beds (10) and are subjected to welding.

9. A method according to claim 8, wherein the welding is performed by a friction stir welding device; and
a joint of said workpieces (4) is positioned on an axis of a height expansion shaft (36) of said height adjustment device (34) of said supporting bed, and a rotary tool of said friction stir welding device is inserted to said joint of said workpieces (W), carrying out said friction stir welding while being moved in the longitudinal direction of said body structure block.

10. A method according to claim 1, wherein said workpieces (W) are turned over after welding one side of said plural workpieces (W) to place the welded surface at the bottom side and the yet to be welded surface at the top side, the welded portion of said workpieces (W) is displaced from said joint supporter (720) on said supporting bed (10) when the bottom side of said works is placed on said joint supporter (720).

11. A method according to claim 8, 9 or 10, wherein said body structure block is an underframe, a side structure or a roof structure of a car body structure.

12. A method according to claim 11, wherein a device employed for welding said plurality of workpieces is a friction stir welding device.

## Patentansprüche

1. Gerät zum Herstellen einer Aufbaustruktureinheit durch längsseitiges Aneinanderreihen und Verschweißen länglicher Werkstücke (W) miteinander, mit:
mehreren Stützlagern (10), die längs einer der Längsrichtung der Werkstücke (W) entsprechenden X-Achse angeordnet sind,
wobei jedes der Stützlager (10) mehrere Stützeinheiten (30) aufweist, die in einer Reihe in einer Y-Achse orthogonal zu der X-Achse angeordnet sind, wobei die Stützeinheiten (30) jeweils eine Verbindungsstütze (70) tragen und eine Expansionsvorrichtung (34) aufweisen, um die Verbindungsstütze (70) in einer Z-Achse orthogonal zu der X- und der Y-Achse zu bewegen, und wobei die Stützeinheiten (30) in ihrer Neigung gegenüber der Z-Achse verstellbar sind,
**dadurch gekennzeichnet, dass**
jedes der Stützlager (10) ein Schraubelement (22) aufweist, das so befestigt ist, dass seine Axialrichtung in Richtung der Y-Achse zeigt,
mehrere Muttervorrichtungen (32) drehbar auf dem Schraubelement (22) befestigt und zur Bewegung längs des Schraubelements (22) ausgelegt sind,
die Stützeinheiten (30) jeweils mit den Muttervorrichtungen (32) verbunden sind, so dass die Stützeinheiten (30) bezüglich der Y-Achse geneigt werden können,
das Stützlager (10) mit Klemmeinheiten (40, 50) ausgerüstet ist, die an Y-Achsen-Enden der Reihe der mehreren Stützeinheiten (30) angeordnet sind, sowie mit Kopplungseinheiten (60), die zwischen den mehreren Stützeinheiten (30) und zwischen einer der Stützeinheiten (30) und einer der Klemmeinheiten (40, 50) angeordnet sind, um die Abstände zwischen den Stützeinheiten (30) anzupassen, und
die Kopplungseinheiten (60) mit den Stützeinheiten (30) und der einen der Klemmeinheiten (40, 50) so verbunden sind, dass sie in der Ebene der Y- und der Z-Achse relativ zueinander drehbar sind.

2. Gerät nach Anspruch 1, wobei die Expansionsvorrichtung (34) jeder Stützeinheit (30) eine Dehnschraube (35) ist, die bezüglich der Muttervorrichtung (32) gestützt wird, und die Verbindungsstütze (70) in einem oberen Bereich der Dehnschraube (35) angeordnet ist.

3. Gerät nach Anspruch 1 oder 2, wobei die Klemmeinheiten (40, 50) jeweils mit einer Dehnschraube (45, 55) ausgerüstet sind, die eine in Richtung der Z-Achse angeordnete Rotationsachse und einen Klemmenkopf (80, 90) aufweist, der in einem oberen Abschnitt der Dehnschraube (45, 55) angeordnet ist, um das Werkstück (W) gegen die Klemmeinheit (40, 50) zu drücken.

4. Gerät nach einem der Ansprüche 1 bis 3, wobei die Kopplungseinheiten (60) jeweils mit einem Mutterelement (660), einer Schraubenstiftanordnung, die drehbar auf dem Mutterelement (660) angeordnet ist, und einem Antriebsmechanismus (62) zum Drehen des Mutterelements (660) ausgerüstet sind, wobei die Schraubenstiftanordnung einen ersten Schraubenstift (640) aufweist, der entweder mit einer weiteren Stützeinheit (30) oder einer der Klemmeinheiten (40, 50) verbunden ist, wobei das Ende des ersten Schraubenstifts (640) in den zweiten Schraubenstift (650) eingeschoben ist, und das Mutterelement (660) an den Schraubgewinden befestigt ist, die an der Außenfläche des ersten und des zweiten Schraubenstifts (640, 650) gebildet sind.

5. Gerät nach einem der Ansprüche 1 bis 4, wobei ein Drehantriebsmechanismus zum Antreiben der Muttervorrichtungen (32), der Expansionsvorrichtungen (74) und der Kopplungseinheiten (60) in Stellmotoren besteht.

6. Gerät nach einem der Ansprüche 1 bis 5, wobei die Klemmeinheit (40, 50) ein Auflager (41, 51) zum Stützen eines Endbereichs des Werkstücks (W) aufweist.

7. Gerät nach einem der Ansprüche 1 bis 6, wobei ein Werkstücklager (710) an einer oberen Fläche der Stützeinheit (30) angeordnet ist, und die Verbindungsstütze (720) zum Stützen eines anstoßenden Bereichs der Werkstücke auf einer oberen Fläche des Werkstücklagers (710) angeordnet ist, wobei das Werkstücklager (710) eine längliche Form entlang der Y-Achse der Werkstücke (W) aufweist, wobei ein longitudinales Ende an einer der Stützeinheiten (30) befestigt ist und das andere longitudinale Ende über einen Stift (730) drehbar an einer oberen Fläche der Stützeinheit (30) eines angrenzenden Stützlagers (10) befestigt ist, wobei ein longitudinales Ende eines angrenzenden Werkstücklagers (710) auf einer oberen Fläche des Stifts (730) aufgelegt ist, und Begrenzungsplatten (740) auf der linken und rechten Seite des Stifts (730) angeordnet sind, um das longitudinale Ende des Werkstücklagers (710) von oben nach unten zu halten, und an den oberen Flächen der Stützeinheit (30) befestigt sind.

8. Verfahren zum Herstellen einer Aufbaustruktureinheit, wobei ein Gerät gemäß einem der Ansprüche 1 bis 7 dazu verwendet wird, mehrere längliche Werkstücke (W) zu halten, die miteinander zu verschweißen sind, um die Einheit zu bilden, wobei die mehreren Werkstücke an den Verbindungsstützen (720) der Stützlager (10) angebracht und befestigt werden und geschweißt werden.

9. Verfahren nach Anspruch 8, wobei das Schweißen durch eine Reibrührschweißvorrichtung durchgeführt wird, und
eine Verbindung der Werkstücke (4) in Richtung eines Höhenexpansionsstifts (36) der Höhenanpassungsvorrichtung (34) des Stützlagers positioniert ist, und ein Drehwerkzeug der Reibrührschweißvorrichtung in die Verbindung der Werkstücke (W) eingeschoben wird, wobei das Werkzeug das Reibrührschweißen ausführt, während es in der Längsrichtung der Aufbaustruktureinheit bewegt wird.

10. Verfahren nach Anspruch 1, wobei die Werkstücke (W) nach dem Schweißen einer Seite der mehreren Werkstücke (W) umgedreht werden, um die geschweißte Fläche auf die Unterseite und die noch zu schweißende Fläche auf die Oberseite zu legen, wobei der geschweißte Bereich der Werkstücke (W) von der Verbindungsstütze (720) auf dem Stützlager (10) verschoben wird, wenn die Unterseite der Werkstücke auf der Verbindungsstütze (720) angeordnet wird.

11. Verfahren nach einem der Ansprüche 8, 9 oder 10, wobei die Aufbaustruktureinheit ein Unterrahmen, eine Seitenstruktur oder eine Dachstruktur einer Wagenkastenstruktur ist.

12. Verfahren nach Anspruch 11, wobei die zum Schweißen der mehreren Werkstücke verwendete Vorrichtung eine Reibrührschweißvorrichtung ist.

## Revendications

1. Dispositif pour fabriquer un bloc de structure de caisse en disposant des pièces à travailler allongées (W) les unes à côté des autres et en les soudant ensemble, comportant :
une pluralité de berceaux de support (10) agencés le long d'un axe X correspondant à la direction longitudinale des pièces à travailler (10),
chaque dit berceau de support (10) ayant une pluralité d'unités de support (30) agencées dans une rangée dans une direction d'axe Y orthogonale à ladite direction d'axe X, lesdites unités de support (30) portant chacune un élément de support de joint (70) et incluant un dispositif d'extension (34) pour déplacer ledit élément de support de joint (70) dans une direction d'axe Z orthogonale auxdites directions d'axe X et Y, et lesdites unités de support (30) étant réglables dans leur inclinaison par rapport à ladite direction d'axe Z,
**caractérisé en ce que**
chaque dit berceau de support (10) a un élément à vis (22) fixé de telle sorte que sa direction axiale est dans ladite direction d'axe Y,
une pluralité de dispositifs à écrou (32) est montée de manière à pouvoir être vissée sur ledit élément à vis (22) et pouvant être déplacée le long dudit élément à vis (22),
lesdits unités de support (30) sont respectivement reliées auxdits dispositifs à écrou (32) de telle sorte que lesdites unités de support (30) peuvent être inclinées dans la direction d'axe Y,
ledit berceau de support (W) est équipé d'unités de serrage (40, 50) disposées à des extrémités d'axe Y de ladite rangée de ladite pluralité d'unités de support (30), et d'unités de couplage (60) disposées entre ladite pluralité d'unités de support (30) et entre une dite unité de support (30) et une desdites unités de serrage (40, 50) pour régler les distances entre lesdites unités de support (30) et
lesdites unités de couplage (60) sont reliées auxdites unités de support (30) et à ladite une unité parmi lesdites unités de serrage (40, 50) de manière à pouvoir tourner de manière relative dans le plan des axes Y et Z.

2. Dispositif selon la revendication 1, dans lequel ledit dispositif d'extension (34) de chaque dite unité de support (30) est un vérin à vis (35) supporté par rapport audit dispositif à écrou (32), et ledit élément de support de joint (70) est disposé sur une partie supérieure dudit vérin à vis (35).

3. Dispositif selon la revendication 1 ou 2, dans lequel lesdites unités de serrage (40, 50) sont chacune équipées d'un vérin à vis (45, 55) ayant un axe de rotation disposé dans la direction d'axe Z et une tête de serrage (80, 90) disposée sur une partie supérieure du vérin à vis (45, 55) pour pousser la pièce à travailler (W) sur ladite unité de serrage (40, 50).

4. Dispositif selon l'une quelconque des revendications 1 à 3, dans lequel lesdites unités de couplage (60) sont chacune équipées d'un élément à écrou (660), d'un ensemble d'arbre à vis monté de manière à pouvoir être vissé sur l'élément à écrou (660), et d'un mécanisme d'entraînement (62) pour faire tourner l'élément à écrou (660), dans lequel ledit ensemble d'arbre à vis comporte un premier arbre à vis (640) relié soit à une autre dite unité de support (30) soit à l'une desdites unités de serrage (40, 50), l'extrémité dudit premier arbre à vis (640) étant insérée dans le second arbre à vis (650), et ledit élément à écrou (660) étant monté sur des filetages de vis formés sur la surface extérieure desdits premier et second arbres à vis (640, 650).

5. Dispositif selon l'une quelconque des revendications 1 à 4, dans lequel un mécanisme d'entraînement rotatif pour entraîner lesdits dispositifs à écrou (32), lesdits dispositifs d'extension (74) et lesdites unités de couplage (60) sont des servomoteurs.

6. Dispositif selon l'une quelconque des revendications 1 à 5, dans lequel ladite unité de serrage (40, 50) a un appui (41, 51) pour supporter une partie d'extrémité de ladite pièce à travailler (W).

7. Dispositif selon l'une quelconque des revendications 1 à 6, dans lequel un berceau de travail (710) est disposé sur une surface supérieure de ladite unité de support (30), et ledit élément de support de joint (720) destiné à supporter une partie aboutée des pièces à travailler est disposé sur une surface supérieure dudit berceau de travail (710), dans lequel ledit berceau de travail (710) a une forme longue agencée le long de la direction d'axe Y des pièces à travailler (W), une extrémité longitudinale étant fixée sur une dite unité de support (30) et l'autre extrémité longitudinale étant fixée de manière rotative via un axe (730) sur une surface supérieure d'une dite unité de support (30) d'un dit berceau de support adjacent (10), l'extrémité longitudinale d'un berceau de travail adjacent (710) étant superposée à une surface supérieure dudit axe (730), et des plaques de retenue (740) sont disposées sur les côtés gauche et droit dudit axe (730) pour maintenir l'extrémité longitudinale dudit berceau de travail (710) à partir du dessus et sont fixées sur la surface supérieure de ladite unité de support (30).

8. Procédé de fabrication d'un bloc de structure de caisse dans lequel un dispositif selon l'une quelconque des revendications 1 à 7 est utilisé pour maintenir une pluralité de pièces à travailler allongées (W) qui doivent être soudées ensemble pour former ledit bloc, ladite pluralité de pièces à travailler étant montée et fixée sur lesdits éléments de support de joint (720) desdits berceaux de support (10) et est soumise à un soudage.

9. Procédé selon la revendication 8, dans lequel le soudage est réalisé par un dispositif de soudage par friction-malaxage ; et
un joint desdites pièces à travailler (4) est positionné sur un axe d'un arbre d'extension de hauteur (36) dudit dispositif de réglage de hauteur (34) dudit berceau de support, et un outil rotatif dudit dispositif de soudage par friction-malaxage est inséré dans ledit joint desdites pièces à travailler (W), en exécutant ledit soudage par friction-malaxage tout en étant déplacé dans la direction longitudinale dudit bloc de structure de caisse.

10. Procédé selon la revendication 1, dans lequel lesdites pièces à travailler (W) sont retournées après soudage d'une face de ladite pluralité de pièces à travailler (W) pour placer la surface soudée sur la face inférieure et la surface encore à souder sur la face supérieure, la partie soudée desdites pièces à travailler (W) est déplacée à partir dudit élément de support de joint (720) sur ledit berceau de support (10) lorsque la face inférieure desdites pièces à travailler est placée sur ledit élément de support de joint (720).

11. Procédé selon la revendication 8, 9 ou 10, dans lequel ledit bloc de structure de caisse est un châssis, une structure latérale ou une structure de toit d'une structure de caisse de voiture.

12. Procédé selon la revendication 11, dans lequel un dispositif utilisé pour souder ladite pluralité de pièces à travailler est un dispositif de soudage par friction-malaxage.
